(19) **Europäisches Patentamt / European Patent Office / Office européen des brevets**

(11) **EP 3 231 640 B1**

(12) # EUROPEAN PATENT SPECIFICATION

(45) Date of publication and mention
of the grant of the patent:
**01.05.2019 Bulletin 2019/18**

(51) Int Cl.:
**B60C 15/024** *(2006.01)*    **B60C 15/00** *(2006.01)*
**B60C 15/06** *(2006.01)*    **B60C 13/02** *(2006.01)*

(21) Application number: **15866478.9**

(22) Date of filing: **02.12.2015**

(86) International application number:
**PCT/JP2015/083886**

(87) International publication number:
**WO 2016/093126 (16.06.2016 Gazette 2016/24)**

(54) **TIRE FOR CONSTRUCTION VEHICLE**

REIFEN FÜR BAUFAHRZEUG

PNEU POUR VÉHICULE DE CHANTIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2014 JP 2014249975**

(43) Date of publication of application:
**18.10.2017 Bulletin 2017/42**

(73) Proprietor: **Bridgestone Corporation
Tokyo 104-8340 (JP)**

(72) Inventor: **NAKAMURA, Shinsuke
Tokyo 104-8340 (JP)**

(74) Representative: **Oxley, Robin John George
Marks & Clerk LLP
90 Long Acre
London WC2E 9RA (GB)**

(56) References cited:
**EP-A1- 0 527 597      EP-A1- 2 602 128
WO-A1-2012/017673   WO-A1-2012/018128
WO-A1-2014/129571   JP-A- H04 362 406
JP-A- 2014 141 169**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

Technical Field

The present invention relates to a construction vehicle tire optimum for use on, for example, a dump truck used in a construction site, a mine, or the like.

Background Art

The tire temperature of a construction vehicle tire equipped on a dump truck or the like for use increases while the dump truck is running. Furthermore, collapsing deformation of a tire bead portion (hereinafter simply referred to as "bead portion") on a flange repeatedly occurs. Therefore, while large strain ceaselessly acts on the bead portion, the temperature of the bead portion continuously remains high (see Patent Literature 1).

When the temperature of a bead portion continuously remains high, separation occurs inside the bead, and the tire cannot be continuously used. Conventionally, therefore, efforts have been made to lower the temperature of a bead portion.

A technique such as forming a fin on the external portion of a tire bead has been proposed. By forming a fin, turbulence occurs on the surface of a tire bead portion during running, and the efficiency of heat transfer from the tire surface portion to outer air is enhanced. This is directed to decreasing the internal temperature of the tire. This technique is particularly effective when the gauge of the tire is thin.

In another proposed technique, a groove or the like is formed throughout the circumference of the outer surface of a tire in order to decrease the amount of rubber which generates heat and expose a high-temperature area on the internal surface of a tire bead portion to outer air. This is directed to lowering the temperature.

Citation List

Patent Literature

Patent Literature 1: JP 2008-1201 A.

Attention is also drawn to the disclosures of EP2,602,128 and EP0,527,597.

Summary of Invention

Technical Problem

However, there is the following problem with the technique forming a fin on the external portion of a tire bead. That is, the surface temperature of a large-sized tire, in other words, a tire with a large gauge on a bead portion decreases, but due to a low heat transfer coefficient of the rubber, the internal temperature of the tire in which separation occurs cannot be significantly decreased.

There is also the following problem with the technique forming a groove or the like throughout the circumference of the outer surface of a tire. That is, as a result of removing a conventional back surface rubber throughout the circumference, collapsing deformation of a bead portion on a flange is greater than that in the conventional tire, and thus the bead durability is not adequately increased.

The present invention has been made in view of the aforementioned problems. An object of the present invention is to provide a construction vehicle tire that can sufficiently suppress an increase in the internal temperature of a bead portion with little increase in collapsing deformation of the bead portion.

Solution to Problem

The present inventor has assumed that a decrease in the amount of heat generated in a tire bead portion or an increase in the amount of heat release is needed to decrease the temperature of the bead portion. By focusing on an increase in the amount of heat release, the present inventor has made the following assessments.

To increase the amount of heat release from the tire bead portion, how to increase the amount of heat transfer from the tire surface to outer air is important. This amount of heat transfer (Q) is proportional to the temperature difference ($\Delta T$) between the tire surface temperature and the outer air temperature as well as to the heat transfer coefficient (K).

$$Q \propto K \times \Delta T$$

The temperature of the tire bead portion is distributed so that the temperature increases from the outer surface to the inner portion of the tire due to running. To increase $\Delta T$, the tire is shaped so that the rubber of the bead portion is gouged from the tire outer surface to the direction of a folded ply of a carcass. The outer air is thereby brought into contact with the high-temperature area of the internal portion of the tire, whereby $\Delta T$ can be increased. However, as described above, the problem of uniformly gouging the entire tire circumference is that collapsing deformation of the bead portion on the flange increases.

The present inventor has conducted extensive examinations on the structure that can increase $\Delta T$ while preventing the aforementioned problem and invented an idea of local gouging. As a result of repeated experiments and further examinations, the present inventor has completed the present invention.

In order to solve the above problem, a construction vehicle tire according to a first aspect of the present invention is as claimed in claim 1. Optional features are as disclosed in the dependent claims.

Advantageous Effects of Invention

The present invention is provides a construction vehicle tire that can sufficiently suppress an increase in the internal temperature of a bead portion with little increase in collapsing deformation of the bead portion.

Brief Description of Drawings

FIG. 1 is a radial-direction cross-sectional view of a construction vehicle tire according to a first embodiment.
FIG. 2 is a schematic side-face view showing a recessed portion on the outer side of the tire according to the first embodiment.
FIG. 3 is a radial-direction cross-sectional view of a construction vehicle tire according to a second embodiment.
FIG. 4 is an explanatory chart showing experimental results in the experimental example.

Description of Embodiments

Hereinafter, an embodiment of the present invention will be explained with reference to the attached drawings. In the following descriptions, same or similar parts are denoted by same or similar reference numerals; and the detailed description thereof is omitted as appropriate.

Also, the embodiment described below is to show examples of embodying technical thinking of the present invention, and embodiments of the present invention does not limit materials, shapes, structures, arrangements and so on of components to those described below. Various changes may be made in the technical thinking of the present invention within the scope of the claims of the patent.

(First Embodiment)

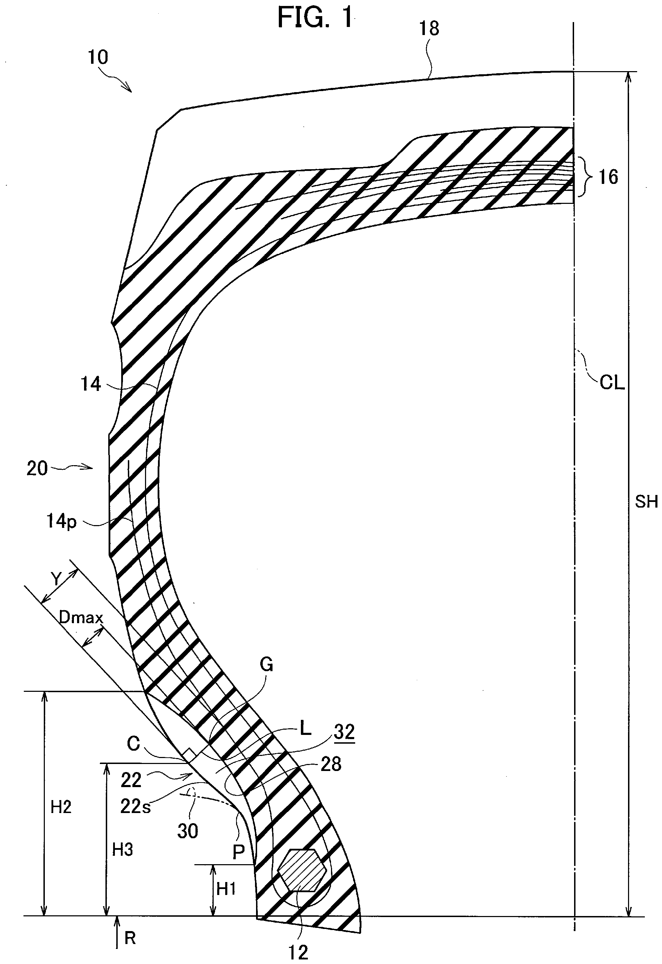

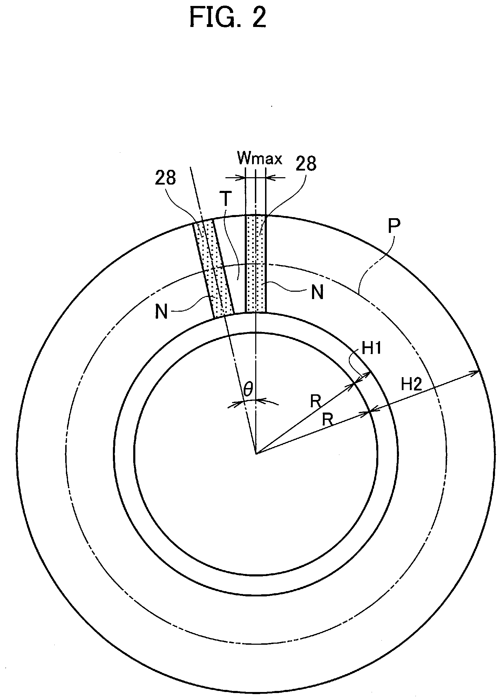

First, a first embodiment will be described. Fig. 1 is a cross-sectional view of a construction vehicle tire in the radial direction according to this embodiment (one side over a tire equatorial plane CL). Fig. 2 is a schematic side view illustrating a recessed portion on the outer side of the tire according to this embodiment (for simplicity, the recessed portions are indicated by hatched dots).

A construction vehicle tire 10 of this embodiment includes a pair of bead cores 12 and a carcass (carcass ply) 14 that extends between the bead cores 12. On the outer side of the carcass 14 in the tire radius direction, a belt layer 16 and a tread portion 18 are arranged in that order.

The carcass 14 has a folded ply 14p that is folded at the bead core 12. According to this embodiment, the folded ply 14p extends to a side wall portion 20. The outer edge of the folded ply in the radial direction may extend to the outer side in the tire radius direction beyond the point where the width of the tire is maximum.

Also, the construction vehicle tire 10 includes a plurality of recessed portions 28, which are formed on a bead portion 22 and aligned with an interval in between in the tire circumference direction so as to be recessed from the outer side of the tire width direction to the side of the folded ply 14p. According to this embodiment, the recessed portions 28 are elongated in the tire radius direction and arranged in a single column along the tire circumference direction. The recessed portions 28, which are adjacent to each other in the tire circumference direction, are not continuous. The recessed portions 28 may be arranged in the area between the bead portion 22 and the side wall portion 20.

With regard to the construction vehicle tire 10, the following relational expressions are satisfied:

$$H1/SH > 0.04;$$

and

$$H2/SH < 0.30,$$

where: SH represents the tire section height; H1 represents the height from the rim radius R height to the inner edge of the recessed portion 28 in the tire radius direction; and H2 represents the height from the rim radius R height to the outer edge of the recessed portion 28 in the tire radius direction. The tire section height refers to the value equal to half the difference between the tire outer diameter and the rim diameter of the employed rim.

The above ranges are determined under the condition where the construction vehicle tire 10 is equipped on a normal rim and a normal internal pressure is applied to the construction vehicle tire 10. In this case, the "normal rim" refers to the standard rim defined in the standards mentioned below according to the tire size. The "normal internal pressure" refers to an air pressure corresponding to the maximum loading capacity of a single wheel of the applicable size provided in the standards mentioned below. The "normal load" refers to the maximum load (maximum loading capacity) of a single wheel of the applicable size provided in the standards mentioned below. Each of the aforementioned standards is an industrial standard effective for regions where a tire is manufactured or used. For example, the Japanese Standards are as provided in "JATMA YEAR BOOK" of "Japan Automobile Tyre Manufacturers Association, Inc." The American Standards are as provided in "YEAR BOOK" of "THE TIRE AND RIM ASSOCIATION INC." The European Standards are as provided in "STANDARD MANUAL" of "The European Tyre and Rim Technical Organisation."

As a result, when the construction vehicle tire 10 is assembled on a rim 30, the recessed portion 28 extends over a separation point P between the rim 30 and the bead portion 22. As illustrated in Fig. 2, on the surface on the outer side of the bead portion 22 in the tire width direction, a non-abutting portion N, which does not abut the rim 30 due to the recessed portion 28, and an abutting portion T, which forms a rubber portion between the adjacent recessed portions 28 so as to abut the rim 30, are alternately arranged in the tire circumference direction.

In the adjacent recessed portions 28 on a side surface view of the tire, lines running through the center in the tire axis direction and the center lines of the recessed portions 28 form an angle θ, which satisfies the following relational expression:

$$3° < \theta < 8°.$$

The aforementioned line running through the center line of the recessed portion 28 is a line that runs through the center of the width in the circumferential direction at the radial height of a deepest portion G of the recessed portion.

Also, the following relational expression is satisfied:

$$0.0034 < Wmax/R < 0.021$$

where: Wmax represents the maximum width of a space 32 formed by the recessed portion 28 in the tire circumference direction; and R represents the rim radius.

A deepest portion running line L is a line that runs through the deepest portion G of the space 32 and is orthogonal to an outer bead circumference 22s when it is assumed that the recessed portion 28 has not been formed in a cross-section running in the tire radius direction through the deepest portion G. With regard to the deepest portion running line L, the following relational expression is satisfied:

$$0.5 < Dmax/Y < 0.8$$

where: Dmax represents the depth to the deepest portion G from an intersection C between the outer bead circumference 22s and the deepest portion running line L; and Y represents the distance from the intersection C to the folded ply 14p. The distance Y to the folded ply 14p refers to the distance to the center of the cord of the folded ply 14p.

Also, the following relational expression is satisfied:

$$0.08 < H3/SH < 0.20$$

where H3 represents the height from the rim radius R height to the intersection C.

It is preferable that the following relational expressions be satisfied:

$$0.07 > H1/SH;$$

and

$$0.21 < H2/SH.$$

Unless these relational expressions are satisfied, the recessed portion 28 is readily removed from a high-temperature location of the bead portion 22. Also, unless the above relational expressions are satisfied, it is difficult to form a viable recessed portion 28 (for the recessed portion 28 to demonstrate its air cooling feature) due to incompatibility with 0.08 < H3/SH < 0.20.

(Operation and effect)

The operation and effect of this embodiment will be described below.

According to this embodiment, when the construction vehicle tire 10 is assembled on the rim 30, the recessed portions 28, which are non-continuous and adjacent to each other in the tire circumference direction, extend over the separation point P. In other words, on the tire outer side of the bead portion 22, the non-abutting portion N and the abutting portion T are alternately arranged in the tire circumference direction, wherein the non-abutting portion N does not abut the rim 30 due to the recessed portion 28 and the abutting portion T forms a rubber portion between the adjacent recessed portions 28 so as to abut the rim 30.

Therefore, the abutting portion T hardly increases collapsing deformation of the bead portion 22. Since the recessed portion 28 extends over the separation point P, the non-abutting portion N can contact outer air and efficiently diffuse heat to the outer air due to the space between the recessed portion 28 and the rim 30. As a result, an increase in the internal temperature of the bead portion 22 can be sufficiently suppressed.

The recessed portions 28 are elongated in the tire radius direction and arranged in a single column along the tire circumference direction. The aforementioned effects can thereby be noticeable with a simple configuration

With respect to the tire side surface, the following relational expression of θ is satisfied:

$$3° < \theta < 8°.$$

The temperature can be thereby effectively decreased. When θ is smaller than the above range, there is a possibility that collapsing deformation of the bead portion 22 is not adequately suppressed. When θ is greater than the above range, there is a possibility that the temperature decreasing effect of the bead portion 22 is not sufficient.

Also, the following relational expression is satisfied:

$$0.0034 < \mathrm{Wmax}/\mathrm{R} < 0.021$$

where: Wmax represents the maximum width in the tire circumference direction; and R represents the rim radius. When Wmax/R is greater than the above range, the chance of occurrence of collapsing deformation of the bead portion 22 is likely to increase. When Wmax/R is smaller than the above range, the temperature decreasing effect of the bead portion 22 is likely to be insufficient.

Also, the following relational expression is satisfied:

$$0.5 < \mathrm{Dmax}/\mathrm{Y} < 0.8$$

where: Dmax represents the depth from the intersection C to the deepest portion G; and Y represents the distance from the intersection C to the folded ply 14p.

The advantageous effect that can be produced is that ΔT increases as the depth Dmax to the deepest portion G increases. When Dmax/Y is greater than the above range and a cut or the like is input to the bottom portion of the recessed portion 28, there is a possibility that input of the cut or the like can directly reach the folded ply 14p. When Dmax/Y is smaller than the above range, a sufficient heat releasing effect cannot be produced.

The temperature distribution of the bead portion 22 can be naturally seen in the tire radius direction. To effectively lower the temperature of the bead portion 22, therefore, it is desired that the tire temperature be distributed in the tire radius direction so that the maximum temperature is in the neighborhood of the intersection C. Accordingly, in the present embodiment, it is preferable that the following relational expression be satisfied:

$$0.08 < \mathrm{H3}/\mathrm{SH} < 0.20.$$

When H3/SH is in this range, a structure can be readily built in which the depth Dmax to the deepest portion G is sufficient while the temperature of the bead portion 22 is effectively decreased.

In this embodiment, an example where the recessed portion 28 extends over the separation point P has been described. However, even in a structure where the recessed portion 28 is located outside the outer rim diameter in the tire radius direction and does not extend over the separation point P, the temperature decreasing effect of the bead portion 22 can be recognized.

(Second Embodiment)

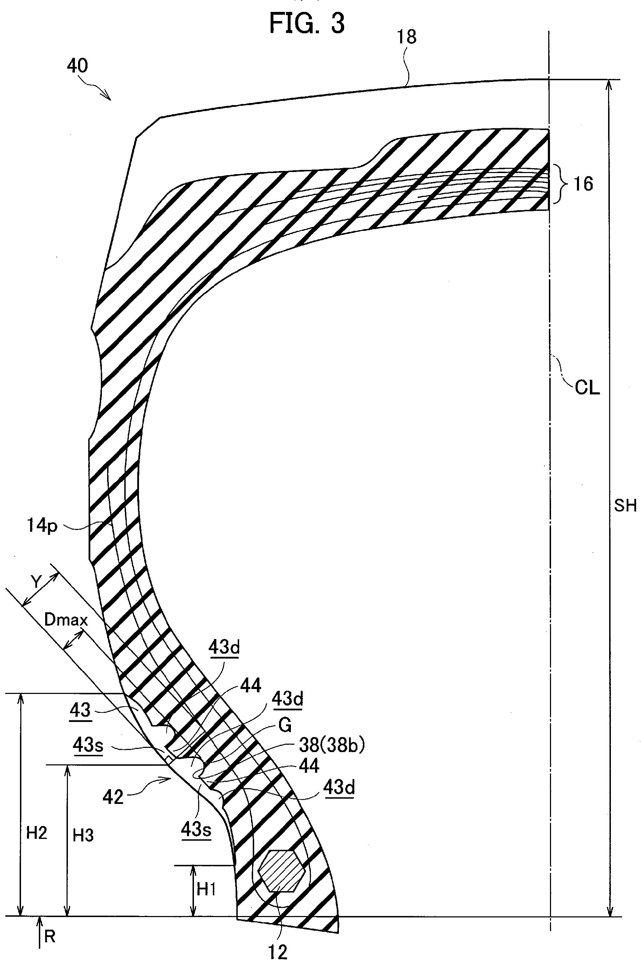

A second embodiment will be described next. Fig. 3 is a cross-sectional view of a construction vehicle tire in the radial direction according to this embodiment. Instead of the recessed portion 28 of the first embodiment, a recessed portion 38 is formed on a bead portion 42 of the construction vehicle tire 40 of this embodiment.

The recessed portions 38 are aligned in the tire circumference direction so as to be recessed from the outer side in the tire width direction to the side of the folded ply 14p. Like the recessed portion 28, the recessed portion 38 extends over the separation point. In the recessed portion 38, a protrusion portion 44 protrudes from a recessed portion wall surface 38b. As a result, a space 43 formed by the recessed portion 38 includes locally deep spatial portions 43d and a shallow spatial portion 43s that connects therebetween. One communicable space 43 is formed in each recessed portion 38.

The spatial shape of the recessed portion 38 may be created by connecting the locally deep spatial portions 43d by the shallow spatial portion 43s, as in the case of this embodiment, in order to produce the temperature decreasing effect of the bead portion 42. Alternatively, when the shape is like a slit, in which the depth gradually increases or decreases, the aforementioned effect can be produced.

To minimize a decrease in the rigidity of the bead portion 42 due to formation of a recessed portion, a preferable shape is where the depth Dmax to the deepest portion G is maintained and the amount of rubber to be removed (the volume of the hollow portion in the recessed portion) is minimized. Meanwhile, when the spaces 43 are assumed to be non-continuous in the recessed portion 38, collapsing deformation of the bead portion 42 at least partially closes the space, whereby progress of air cooling is hindered. To ensure maintenance of the air cooling effect of the bead portion 42, therefore, spaces within the recessed portion 38 need to be continuous even during occurrence of collapsing deformation of the bead portion 42.

A preferable configuration that satisfies the foregoing requirements is the configuration of this embodiment where the space 43 is shaped by connecting the locally deep spatial portions 43d by the shallow spatial portion 43s. When the deepest portion G of the space 43 is formed at a plurality of locations, a line running through the midpoint of a line connecting the deepest portion G at the innermost location in the tire radius direction and the deepest portion G at the outermost location in the tire radius direction is a deepest portion running line L.

(Examples)

The present inventor used Examples 1 to 8 and 10 to 13 as the construction vehicle tire 10 of the first embodiment, Example 9 as the construction vehicle tire 40 of the second embodiment, and the conventional example as an exemplary conventional construction vehicle tire. With the normal rim and at the normal internal pressure and a tire speed of 8 km/h, straight travel was conducted. The temperature of the area above the folded ply 14p for measuring the distance Y was measured.

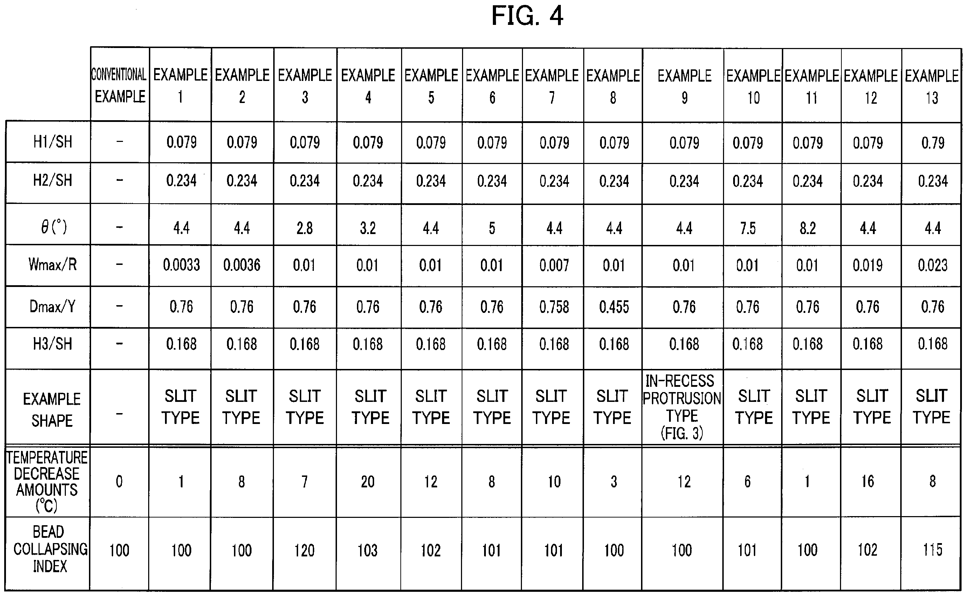

Common conditions of the tire were a tire size of 46/90R57 and conditions complying with TRA (an internal pressure of 700 kPa, a load of 63 tons, a rim width of 29 inches, and a flange height of 6.0 inches). The other common tire conditions are shown in Fig. 4.

The temperature measurements lower than those of the conventional example were determined as "temperature decrease amounts." The results are also shown in Fig. 4. Therefore, the temperature decreasing effect increases with an increase in the value of the temperature decrease amount.

In addition, the prevent inventor calculated the bead collapsing index based on the conventional example and Examples 1 to 13. The bead collapsing index was calculated with respect to the displacement in the tire cross-section at a constant height in the tire bead portion cross-section between the time when the internal pressure was applied and the time when the load was acting from directly below. By setting the value of the bead collapsing index of the conventional example to 100, the comparative values of Examples 1 to 13 were calculated. The calculation results are also shown in Fig. 4. According to the figure, as the value of the bead collapsing index increases, the degree of collapse increases, and the strain in the cross-section in the tire radius direction increases.

As can be seen in Fig. 4, the temperature of each of Examples 1 to 13 was lower than that of the conventional example. In Example 13, the bead collapsing index was relatively large, but the temperature decrease amount was sufficient. In Examples 3 and 13, since the bead collapse was large, the temperature decrease amount was not very large.

Industrial Applicability

The present invention is provides a construction vehicle tire that can sufficiently suppress an increase in the internal temperature of a bead portion with little increase in collapsing deformation of the bead portion.

Reference Signs List

10 CONSTRUCTION VEHICLE TIRE
12 BEAD CORE
14 CARCASS
14p FOLDED PLY
22 BEAD PORTION
22s OUTER BEAD CIRCUMFERENCE
28 RECESSED PORTION
30 RIM
32 SPACE
38 RECESSED PORTION
42 BEAD PORTION
43 SPACE
43d SPATIAL PORTION
43s SPATIAL PORTION
H1 HEIGHT
H2 HEIGHT
H3 HEIGHT
G DEEPEST PORTION
L DEEPEST PORTION RUNNING LINE
C INTERSECTION
P SEPARATION POINT
Wmax MAXIMUM WIDTH
R RIM RADIUS
SH TIRE SECTION HEIGHT
Y DISTANCE

Claims

1. A construction vehicle tire (10) comprising:

   a pair of bead cores (12) constituting a bead portion (22, 42); and
   a carcass (14) that extends over the pair of bead cores (12) and has a folded ply (14p) that is folded at the bead core (12), wherein
   the bead portion (22, 42) includes a plurality of recessed portions (28, 38) that are aligned with an interval in between in a tire circumference direction so as to be recessed from a tire outer side to a side of the folded ply, and
   the following relational expressions are satisfied:

   $$H1/SH > 0.04;$$

   and

   $$H2/SH < 0.30$$

   where: SH represents a tire section height; H1 represents a height from a rim radius (R) height to an inner edge of the recessed portion (28, 38) in a tire radius direction; and H2 represents a height from the rim radius (R) height to an outer edge of the recessed portion (28, 38) in the tire radius direction, **characterised in that** under a condition of being assembled on a rim (30), the recessed portion (28, 38) extends over a separation point (P) between the rim (30) and the bead portion (22, 42).

2. The construction vehicle tire (10) according to claim 1, wherein
the recessed portions (28, 38) are elongated in the tire radius direction and are arranged in a single column in the tire circumference direction.

3. The construction vehicle tire (10) according to claim 1 or 2, wherein
in the recessed portions (28, 38) adjacent to each other with respect to a tire side surface, lines that run through a center in a tire axis direction and center lines of the recessed portions (28, 38) form an angle θ, which satisfies the following relational expression:

$$3° < \theta < 8°.$$

4. The construction vehicle tire (10) according to claim 3, wherein the following relational expression is satisfied:

$$0.0034 < Wmax/R < 0.021$$

where: Wmax represents a maximum width of a space (32, 43) formed by the recessed portion (28, 38) in the tire circumference direction; and R represents the rim radius.

5. The construction vehicle tire according to claim 4, wherein
in a cross-section running in the tire radius direction through a deepest portion of the space (32, 43), when a deepest portion running line (L) is a line that runs through the deepest portion (G) of the space (32, 43) and is orthogonal to an outer bead circumference (22s), and when the outer bead circumference (22s) based on an assumption that the recessed portion (28, 38) has not been formed in the cross-section, the following relational expression is satisfied:

$$0.5 < Dmax/Y < 0.8$$

where: Dmax represents a depth to the deepest portion (G) from an intersection between the outer bead circumference (22s) and the deepest portion running line (L); and Y represents a distance from the intersection (C) to the folded ply (14p).

6. The construction vehicle tire (10) according to claim 5, wherein

the following relational expression is satisfied:

$$0.08 < H3/SH < 0.20$$

where H3 represents a height from the rim radius (R) height to the intersection (C).

7. The construction vehicle tire (10) according to any one of claims 1 to 6, wherein
the space (32, 43) includes locally deep spatial portions (43d) and a shallow spatial portion (43s) that connects therebetween, and one communicable space is formed in each recessed portion (28, 28).

**Patentansprüche**

1. Baufahrzeugreifen (10), der Folgendes umfasst:

ein Paar von Wulstkernen (12), die einen Wulstabschnitt (22, 42) darstellen, und
eine Karkasse (14), die sich über das Paar von Wulstkernen (12) erstreckt und eine gefaltete Schicht (14p) aufweist, die an dem Wulstkern (12) gefaltet ist, wobei
der Wulstabschnitt (22, 42) mehrere ausgesparte Abschnitte (28, 38) umfasst, die mit einem Abstand dazwischen in einer Reifenumfangsrichtung so angeordnet sind, dass sie von einer Reifenaußenseite zu einer Seite der gefalteten Schicht ausgespart sind, und
die folgenden Vergleichsausdrücke erfüllt sind:

$$H1/SH > 0{,}04$$

und

$$H2/SH < 0{,}30,$$

wobei: SH eine Reifen-Querschnittshöhe darstellt, H1 eine Höhe von einer Höhe eines Felgenradius (R) bis zu einer inneren Kante des ausgesparten Abschnitts (28, 38) in einer Reifenradiusrichtung darstellt und H2 eine Höhe von der Höhe eines Felgenradius (R) bis zu einer äußeren Kante des ausgesparten Abschnitts (28, 38) in der Reifenradiusrichtung darstellt, **dadurch gekennzeichnet, dass** unter einer Bedingung, dass er auf einer Felge (30) montiert ist, sich der ausgesparte Abschnitt (28, 38) über einen Trennungspunkt (P) zwischen der Felge (30) und dem Wulstabschnitt (22, 42) erstreckt.

**2.** Baufahrzeugreifen (10) nach Anspruch 1, wobei die ausgesparten Abschnitte (28, 38) in der Reifenradiusrichtung länglich sind und in der Reifenumfangsrichtung in einer einzigen Spalte angeordnet sind.

**3.** Baufahrzeugreifen (10) nach Anspruch 1 oder 2, wobei
in den ausgesparten Abschnitten (28, 38), die zueinander in Bezug auf eine Reifenseitenfläche benachbart sind, Linien, die durch eine Mitte in einer Reifenachsenrichtung laufen, und Mittellinien der ausgesparten Abschnitte (28, 38) einen Winkel θ bilden, der den folgenden Vergleichsausdruck erfüllt:

$$3° < \theta < 8°.$$

**4.** Baufahrzeugreifen (10) nach Anspruch 3, wobei der folgende Vergleichsausdruck erfüllt ist:

$$0{,}0034 < Wmax/R < 0{,}21,$$

wobei: Wmax eine maximale Breite eines Raums (32, 43), der durch den ausgesparten Abschnitt (28, 38) in der Reifenumfangsrichtung gebildet wird und R den Felgenradius darstellt.

**5.** Baufahrzeugreifen nach Anspruch 4, wobei
in einem Querschnitt, der in der Reifenradiusrichtung durch einen tiefsten Abschnitt des Raums (32, 43) verläuft, wenn eine Tiefstabschnitt-Verlaufslinie (L) eine Linie ist, die durch den tiefsten Abschnitt (G) des Raums (32, 43) verläuft und senkrecht zu einem äußeren Wulstumfang (22s) ist, und wenn der äußere Wulstumfang (22s) auf Grundlage einer Annahme, dass der ausgesparte Abschnitt (28, 38) nicht in dem Querschnitt geformt worden ist, der folgende Vergleichsausdruck erfüllt ist:

$$0{,}5 < Dmax/Y < 0{,}8,$$

wobei: Dmax eine Tiefe bis zu dem Tiefsten Abschnitt (G) von einem Schnittpunkt zwischen dem äußeren Wulstumfang (22s) und der Tiefstabschnitt-Verlaufslinie (L) darstellt und Y eine Entfernung von dem Schnittpunkt (C) bis zu der gefalteten Schicht (14p) darstellt.

**6.** Baufahrzeugreifen (10) nach Anspruch 5, wobei der folgende Vergleichsausdruck erfüllt ist:

$$0{,}08 < H3/SH < 0{,}20,$$

wobei H3 eine Höhe von der Höhe des Felgenradius (R) bis zu dem Schnittpunkt (C) darstellt.

**7.** Baufahrzeugreifen (10) nach einem der Ansprüche 1 bis 6, wobei
der Raum (32, 43) örtlich tiefe räumliche Abschnitte (43d) und einen flachen räumlichen Abschnitt (43s), der zwischen denselben verbindet, einschließt, und ein verbindbarer Raum in jedem ausgesparten Abschnitt (28, 38) geformt ist.

**Revendications**

**1.** Bandage pneumatique pour véhicule de chantier (10), comprenant :

une paire de tringles (12) constituant une partie de talon (22, 42) ; et
une carcasse (14) s'étendant au-dessus de la paire de tringles (12) et comportant une nappe pliée (14p), pliée au niveau de la tringle (12) ;
dans lequel :

la partie de talon (22, 42) inclut plusieurs parties évidées (28, 38) alignées avec un intervalle entre elles dans une direction circonférentielle du bandage pneumatique, de sorte à être évidées d'un côté externe du bandage pneumatique vers un côté de la nappe pliée ; et
les expressions relationnelles ci-dessous sont satisfaites :

$$H1/SH > 0{,}04 \ ;$$

et

$$H2/SH < 0{,}30$$

où : SH représente une hauteur de section du bandage pneumatique ; H1 représente une hauteur d'une hauteur du rayon de jante (R) vers un bord interne de la partie évidée (28, 38), dans une direction radiale du bandage pneumatique ; et H2 représente une hauteur de la hauteur du rayon de la jante (R) vers un bord externe de la partie évidée (28, 38), dans la direction radiale du bandage pneumatique, **caractérisé en ce que**, dans un état assemblé sur une jante (30), la partie évidée (28, 38) s'étend au-dessus d'un point de séparation (P) entre la jante (30) et la partie de talon (22, 42).

**2.** Bandage pneumatique pour véhicule de construction (10) selon la revendication 1, dans lequel :
les parties évidées (28, 38) sont allongées dans une direction radiale du bandage pneumatique et sont agencées dans une seule colonne dans la direction circonférentielle du bandage pneumatique.

**3.** Bandage pneumatique pour véhicule de construction (10) selon les revendications 1 ou 2, dans lequel :
dans les parties évidées (28, 38) adjacentes les unes aux autres par rapport à une surface latérale du bandage pneumatique, des lignes traversant un centre dans une direction axiale du bandage pneumatique et des lignes médianes des parties évidées (28, 38) forment un angle θ, satisfaisant l'expression relationnelle ci-dessous :

$$3° < \theta < 8°.$$

**4.** Bandage pneumatique pour véhicule de construction (10) selon la revendication 3, dans lequel :
l'expression relationnelle ci-dessous est satisfaite :

$$0,0034 < \text{Wmax/R} < 0,021$$

où : Wmax représente une largeur maximale d'un espace (32, 43) formé par la partie évidée (28, 38) dans la direction circonférentielle du bandage pneumatique ; et R représente le rayon de la jante.

**5.** Bandage pneumatique pour véhicule de construction selon la revendication 4, dans lequel :
dans une section transversale allant dans la direction radiale du bandage pneumatique à travers la partie la plus profonde de l'espace (32, 43), lorsqu'une ligne suivant la partie la plus profonde (L) est une ligne suivant la partie la plus profonde (G) de l'espace (32, 43) et est orthogonale à une circonférence externe du talon (22s), et lorsque la circonférence externe du talon (22s), sur la base d'une supposition selon laquelle la partie évidée (28, 38) n'a pas été formée dans la section transversale, l'expression relationnelle ci-dessous est satisfaite :

$$0,5 < \text{Dmax/Y} < 0,8 ;$$

où : Dmax représente une profondeur à la partie la plus profonde (G) d'une intersection entre la circonférence externe du talon (22s) et la ligne suivant la partie la plus profonde (L) ;
et Y représente une distance entre l'intersection (C) et la nappe pliée (14p).

**6.** Bandage pneumatique pour véhicule de construction (10) selon la revendication 5, dans lequel l'expression relationnelle ci-dessous est satisfaite :

$$0,08 < \text{H3/SH} < 0,20 ;$$

où : H3 représente une hauteur de la hauteur du rayon de la jante (R) vers l'intersection (C).

**7.** Bandage pneumatique pour véhicule de construction (10) selon l'une quelconque des revendications 1 à 6, dans lequel :
l'espace (32, 43) inclut des parties spatiales localement profondes (43D) et une partie spatiale peu profonde (43s) connectée entre elles, un espace à communication étant formé dans chaque partie évidée (28, 38).

# FIG. 1

# FIG. 2

# FIG. 3

## FIG. 4

| | CONVENTIONAL EXAMPLE | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 | EXAMPLE 13 |
|---|---|---|---|---|---|---|---|---|---|---|---|---|---|---|
| H1/SH | – | 0.079 | 0.079 | 0.079 | 0.079 | 0.079 | 0.079 | 0.079 | 0.079 | 0.079 | 0.079 | 0.079 | 0.079 | 0.79 |
| H2/SH | – | 0.234 | 0.234 | 0.234 | 0.234 | 0.234 | 0.234 | 0.234 | 0.234 | 0.234 | 0.234 | 0.234 | 0.234 | 0.234 |
| $\theta$ (°) | – | 4.4 | 4.4 | 2.8 | 3.2 | 4.4 | 5 | 4.4 | 4.4 | 4.4 | 7.5 | 8.2 | 4.4 | 4.4 |
| Wmax/R | – | 0.0033 | 0.0036 | 0.01 | 0.01 | 0.01 | 0.01 | 0.007 | 0.01 | 0.01 | 0.01 | 0.01 | 0.019 | 0.023 |
| Dmax/Y | – | 0.76 | 0.76 | 0.76 | 0.76 | 0.76 | 0.76 | 0.758 | 0.455 | 0.76 | 0.76 | 0.76 | 0.76 | 0.76 |
| H3/SH | – | 0.168 | 0.168 | 0.168 | 0.168 | 0.168 | 0.168 | 0.168 | 0.168 | 0.168 | 0.168 | 0.168 | 0.168 | 0.168 |
| EXAMPLE SHAPE | – | SLIT TYPE | SLIT TYPE | SLIT TYPE | SLIT TYPE | SLIT TYPE | SLIT TYPE | SLIT TYPE | SLIT TYPE | IN-RECESS PROTRUSION TYPE (FIG. 3) | SLIT TYPE | SLIT TYPE | SLIT TYPE | SLIT TYPE |
| TEMPERATURE DECREASE AMOUNTS (°C) | 0 | 1 | 8 | 7 | 20 | 12 | 8 | 10 | 3 | 12 | 6 | 1 | 16 | 8 |
| BEAD COLLAPSING INDEX | 100 | 100 | 100 | 120 | 103 | 102 | 101 | 101 | 100 | 100 | 101 | 100 | 102 | 115 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008001201 A
- EP 2602128 A
- EP 0527597 A